# EUROPEAN PATENT SPECIFICATION

(11) **EP 4 528 617 B1**
(45) Date of publication and mention of the grant of the patent: **23.09.2026**
(21) Application number: 23823944.6
(22) Date of filing: 14.06.2023
(51) Int. Cl.: F03D 17/00, G06Q 10/20, G06Q 50/06, F03D 80/50

(54) **CONTROL DEVICE, TERMINAL DEVICE, MANAGEMENT SYSTEM, AND MANAGEMENT METHOD**
STEUERUNGSVORRICHTUNG, ENDGERÄTEVORRICHTUNG, VERWALTUNGSSYSTEM UND VERWALTUNGSVERFAHREN
DISPOSITIF DE COMMANDE, DISPOSITIF TERMINAL, SYSTÈME DE GESTION, ET PROCÉDÉ DE GESTION

(30) Priority: 16.06.2022 JP 2022097400
(43) Date of publication of application: 26.03.2025
(73) Proprietor: NTN Corporation, Osaka-shi Osaka 530-0005 (JP)
(72) Inventor: SUZUKI, Katsuyoshi, Iwata-shi, Shizuoka 438-8510 (JP)
(74) Representative: Bockhorni & Brüntjen Partnerschaft Patentanwälte mbB
(86) International application number: PCT/JP2023/022048
(87) International publication number: WO 2023/243654

(56) References cited:
- EP-A1- 3 989 329
- WO-A1-2020/255980
- WO-A1-2021/244718
- JP-A- 2016 089 997
- JP-A- 2017 163 445
- JP-A- 2020 012 690
- JP-A- 2020 012 690

## Description

### TECHNICAL FIELD

The present disclosure relates to a controller, a terminal device, a management system, and a management method.

### BACKGROUND ART

For example, Japanese Patent No. 5510926 (PTL 1) discloses a detection method for detecting an abnormality in a blade bearing of a wind turbine generator. JP2020012690A is another prior art example disclosing a method of detecting an abnormality on a wind turbine.

### CITATION LIST

### PATENT LITERATURE

PTL 1: Japanese Patent No. 5510926

### SUMMARY OF INVENTION

### TECHNICAL PROBLEM

The above-mentioned detection method took no consideration of a technique for allowing a maintenance person or the like to recognize maintenance information for eliminating an abnormality in the wind turbine generator.

The present disclosure has been made to solve the above-described problem, and an object thereof is to provide a technique for allowing a maintenance person or the like to recognize maintenance information for eliminating an abnormality in a wind turbine generator.

### SOLUTION TO PROBLEM

A management system according to claim 1 includes a detection unit, a controller, and a terminal device. The detection unit acquires detection data of a wind turbine generator. The controller generates maintenance information related to maintenance for the wind turbine generator based on the detection data. The controller is configured to transmit the maintenance information to a first terminal device.

A controller according to the present disclosure includes an input interface, a processor, and an output interface. The input interface receives an input of detection data of a wind turbine generator from a detection unit that acquires the detection data. The processor generates maintenance information related to maintenance for the wind turbine generator based on the detection data. The output interface transmits the maintenance information to a first terminal device.

A management method according to the present disclosure includes: receiving an input of detection data of a wind turbine generator from a detection unit that acquires the detection data; generating maintenance information related to maintenance for the wind turbine generator based on the detection data; and transmitting the maintenance information to a first terminal device.

### ADVANTAGEOUS EFFECTS OF INVENTION

The present disclosure allows a maintenance person or the like to recognize maintenance information for eliminating an abnormality in a wind turbine generator.

### BRIEF DESCRIPTION OF DRAWINGS

Fig. 1 is a diagram showing a configuration example of a management system according to a present embodiment.
Fig. 2 is a diagram showing a hardware configuration of a controller according to the present embodiment.
Fig. 3 is a functional block diagram of the controller according to the present embodiment.
Fig. 4 is a functional block diagram of a maintenance terminal.
Fig. 5 is a diagram showing an example of a maintenance image.
Fig. 6 is a diagram showing an example of a captured image.
Fig. 7 is an example of a flowchart illustrating a process of the maintenance terminal and a process of the controller.

### DESCRIPTION OF EMBODIMENTS

Hereinafter, embodiments of the present invention will be described with reference to the accompanying drawings. In the accompanying drawings, the same or corresponding portions are denoted by the same reference characters, and the description thereof will not be repeated.

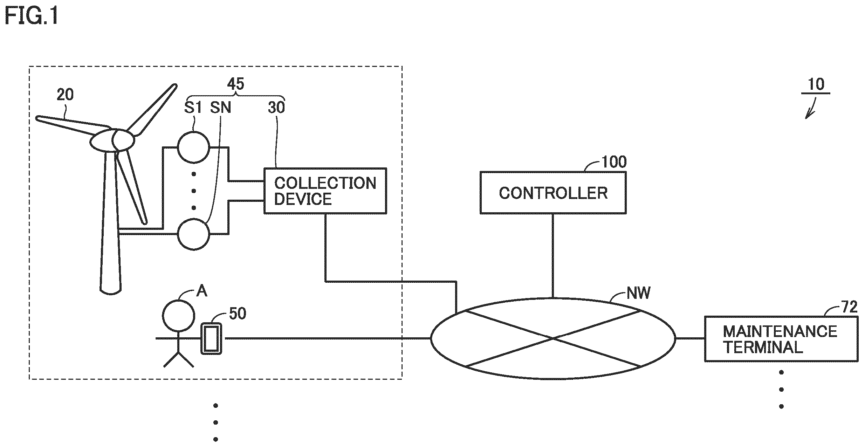

Fig. 1 is a diagram showing a configuration example of a management system 10 according to the present disclosure. Management system 10 according to the present disclosure includes at least one wind turbine generator 20, at least one detection unit 45, a controller 100, at least one user terminal 50, at least one maintenance terminal 72, and a network NW. A collection device 30, controller 100, user terminal 50, and maintenance terminal 72 can communicate with each other through network NW. Maintenance terminal 72 corresponds to the "first terminal device" of the present disclosure, and user terminal 50 corresponds to the "second terminal device" of the present disclosure.

Wind turbine generator 20 serves to receive wind power to generate electric power. Wind turbine generator 20 includes a bearing, a power generator, and the like. Detection unit 45 is installed in association with wind turbine generator 20. Detection unit 45 monitors a component of a corresponding wind turbine generator 20 to acquire detection data of the component. The detection data is used for detecting an abnormality in wind turbine generator 20. The component is also referred to as a "detection target component".

In the example in Fig. 1, detection unit 45 is constituted of N (N is an integer equal to or larger than 1) sensors S (S1 to SN) and collection device 30. Sensor S detects a physical quantity of wind turbine generator 20. The physical quantity may be any quantity as long as an abnormality in wind turbine generator 20 can be detected. For example, sensor S may serve to detect vibrations of a bearing of wind turbine generator 20, and the physical quantity detected by sensor S is the frequency of the vibrations. Further, sensor S may serve to detect the amount of electric power generated by the power generator of wind turbine generator 20, and the physical quantity detected by sensor S is the amount of generated electric power. Collection device 30 collects the physical quantities detected by N sensors. Then, collection device 30 transmits the collected physical quantities as detection data to controller 100. Further, together with the detection data, collection device 30 transmits a wind turbine generator ID (identification) of wind turbine generator 20 associated with collection device 30 to controller 100. The wind power generator ID is information for identifying wind turbine generator 20. Controller 100 holds a database (not shown). Also, based on the wind turbine generator ID, controller 100 can specify an installation position of wind turbine generator 20 that is indicated by this wind turbine generator ID.

Note that the detection data may be other data instead of the data detected by each sensor. Detection unit 45 may include, for example, a camera, and the detection data may be an image captured by the camera.

Controller 100 generates maintenance information based on the detection data. In this case, the maintenance information is related to maintenance of a part (a component) having an abnormality or an abnormality sign in wind turbine generator 20. The information indicating an abnormality sign in wind turbine generator 20 indicates that an abnormality does not occur at present but will occur in the future. In the present embodiment, controller 100 generates maintenance information with the use of artificial intelligence (AI).

Maintenance terminal 72 is a terminal owned by a maintenance service provider or a maintenance team who performs maintenance for wind turbine generator 20. Maintenance terminal 72 is involved with maintenance for wind turbine generator 20. When controller 100 detects an abnormality in wind turbine generator 20, a person in charge of maintenance may perform maintenance for eliminating the abnormality. Thus, controller 100 requests the maintenance service provider or the maintenance team to perform maintenance for wind turbine generator 20. Maintenance terminal 72 serves to receive a request for maintenance. Specifically, controller 100 transmits maintenance information to maintenance terminal 72. A display device of maintenance terminal 72 shows a maintenance image based on the maintenance information. The maintenance image will be described later. A person who performs maintenance for wind turbine generator 20 is also referred to as a "maintenance person".

Maintenance terminal 72 is a portable terminal that can be carried by a maintenance person. The portable terminal is, for example, a smartphone, a tablet, or the like. Maintenance terminal 72 may be, for example, a stationary terminal (for example, a desktop personal computer). Further, maintenance terminal 72 may be a dedicated computer terminal. The display device of maintenance terminal 72 shows various images as described later.

User terminal 50 is a terminal device owned by a user A. The "user" typically refers to a person who owns wind turbine generator 20. User terminal 50 is typically a portable terminal that can be carried by user A. Further, user terminal 50 may be a dedicated computer terminal.

### [Hardware Configuration of Controller]

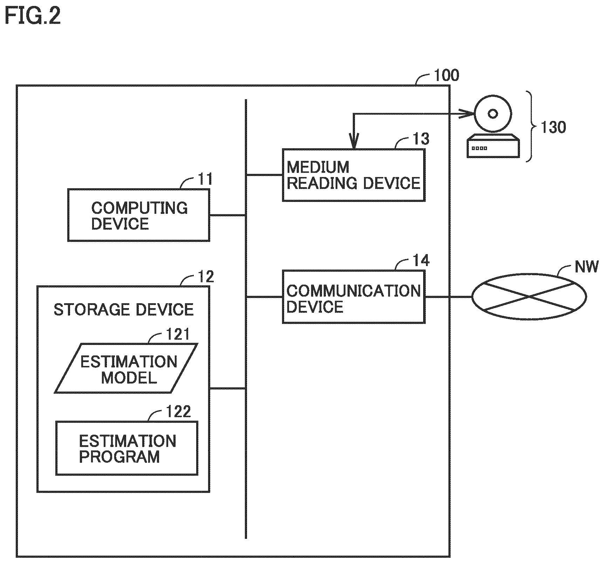

Fig. 2 is a block diagram showing a hardware configuration of controller 100 according to the present embodiment. An example of the hardware configuration of controller 100 according to the present embodiment will be hereinafter described with reference to Fig. 2.

As shown in Fig. 2, controller 100 includes, as main hardware elements, a computing device 11, a storage device 12, a medium reading device 13, and a communication device 14.

Computing device 11 is a computing entity that executes various programs to perform various processes such as an estimation process and a learning process for an estimation model 121, and is one example of a computer. Computing device 11 is constituted, for example, of a central processing unit (CPU), a field-programmable gate array (FPGA), a graphics processing unit (GPU), and the like. Note that computing device 11 may be constituted of at least one of the CPU, the FPGA, and the GPU, or may be constituted of the CPU and the FPGA, the FPGA and the GPU, the CPU and the GPU, or all of the CPU, the FPGA, and the GPU. Further, computing device 11 may be constituted of processing circuitry.

Storage device 12 includes a volatile storage area (for example, a working area) that temporarily stores a program code, a work memory, and the like when computing device 11 executes an arbitrary program. For example, storage device 12 is constituted of a volatile memory device such as a dynamic random access memory (DRAM) or a static random access memory (SRAM). Further, storage device 12 includes a non-volatile storage area. For example, storage device 12 is constituted of a non-volatile memory device such as a hard disk or a solid state drive (SSD).

Although the present embodiment describes an example in which the volatile storage area and the non-volatile storage area are included in the same storage device 12, the volatile storage area and the non-volatile storage area may be included in different storage devices. For example, computing device 11 may include a volatile storage area, and storage device 12 may include a non-volatile storage area. Controller 100 may include a microcomputer including computing device 11 and storage device 12.

Storage device 12 stores estimation model 121 and an estimation program 122. Estimation model 121 includes a neural network and parameters used in a process in the neural network. The parameters include a weighting coefficient used for calculation by the neural network and a determination value used for determination of the estimation.

Estimation model 121 includes a program at least capable of machine learning and performs machine learning based on learning data (training data) so that estimation model 121 is optimized (adjusted). The learning data includes input data and ground truth data. The input data includes detection data and a maintenance schedule. As described above, the detection data is to be transmitted from detection unit 45. The maintenance schedule is set by the maintenance person or a user of wind turbine generator 20. For example, in general, a higher temperature in the summer season leads to an increased maintenance burden on the maintenance person. Thus, the maintenance schedule is set to be a time period other than summer by the user or the like. The maintenance schedule is stored, for example, in the RAM of controller 100.

The ground truth data includes maintenance information, which will be described later. Upon receipt of input data, estimation model 121 estimates maintenance information by a neural network 1211 based on the input data. Then, estimation model 121 compares the maintenance information estimated by estimation model 121 itself with the maintenance information included in the ground truth data. Based on this comparison, if the degree of coincidence of information is within a prescribed range, estimation model 121 does not update a parameter 1212, but if the degree of coincidence is out of the prescribed range, estimation model 121 updates parameter 1212 such that the degree of coincidence is within the prescribed range. Thus, estimation model 121 optimizes parameter 1212. In this way, estimation model 121 performs machine learning by optimizing parameter 1212 with the use of learning data including the input data and the ground truth data.

The process of learning estimation model 121 as described above is also referred to as a "learning process". Estimation model 121 optimized by the learning process is also particularly referred to as a "learned model". In other words, in the present embodiment, estimation model 121 before learning and estimation model 121 after learning are collectively referred to as an "estimation model", and particularly, estimation model 121 after learning is also referred to as a "learned model".

Estimation program 122 is a program for computing device 11 to perform the estimation process and the learning process. Medium reading device 13 receives a storage medium such as a removable disk 130 and acquires data stored in removable disk 130.

Communication device 14 transmits and receives data to and from another device (user terminal 50 or maintenance terminal 72) via network NW.

### [Functional Configuration of Estimation Device]

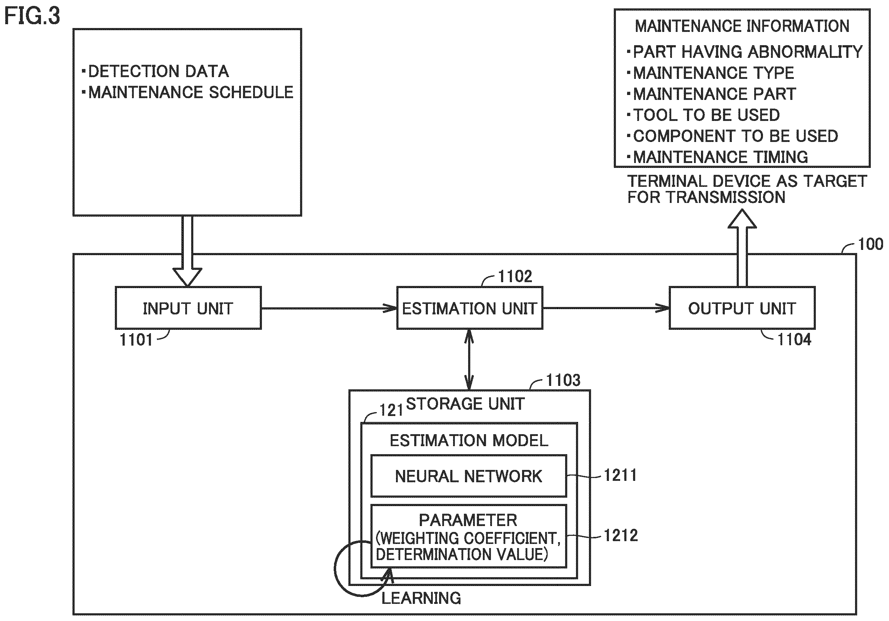

Fig. 3 is a functional block diagram of controller 100 according to the present embodiment. As shown in Fig. 3, controller 100 includes, as main functional units, an input unit 1101, an estimation unit 1102, a storage unit 1103, and an output unit 1104.

Input unit 1101 corresponds to communication device 14 and receives input data. As described above, the input data includes the detection data and the maintenance schedule.

Estimation unit 1102 estimates maintenance information based on the input data input through input unit 1101 and estimation model 121 including neural network 1211. Storage unit 1103 corresponds to storage device 12, and stores estimation model 121 including neural network 1211 and parameter 1212.

Output unit 1104 corresponds to communication device 14, and externally outputs the maintenance information estimated by estimation unit 1102 and the information indicating a terminal device as a target for transmission.

The following describes maintenance information. The maintenance information is optimal information for the maintenance person to perform maintenance for wind turbine generator 20. The maintenance information includes an abnormal part, a maintenance type, a maintenance part, a tool to be used, a used component, and a maintenance timing.

The abnormal part is information indicating a part having an abnormality in wind turbine generator 20. The abnormal part is, a bearing. The maintenance type is information indicating a type of maintenance for wind turbine generator 20. The type of maintenance includes, at least one of a repair of a component of wind turbine generator 20, a position adjustment of the component, and an inspection of the component. The component of wind turbine generator 20 is, a bearing. The position adjustment of the component of wind turbine generator 20 includes, a position adjustment of a main shaft of a bearing of wind turbine generator 20. The inspection of wind turbine generator 20 includes, for example, an inspection of components contained in lubricating oil of wind turbine generator 20.

The maintenance part is information indicating a part where maintenance is performed in wind turbine generator 20. The maintenance part is a part indicating an abnormality or an abnormality sign. The tool to be used is a tool necessary for maintenance of wind turbine generator 20. The tool includes, for example, a stethoscope for listening to abnormal sounds of a bearing.

The used component is, for example, a component that needs to be replaced since it has an abnormality. The used component includes, for example, a speed-up gear, a power generator, a bearing, and the like. The maintenance timing indicates a timing suitable for performing maintenance. The maintenance timing is, for example, winter and the like.

The information indicating the terminal device as a target for transmission indicates the terminal device to which the maintenance information is to be transmitted. For example, in the case where the abnormality in wind turbine generator 20 is severe, the maintenance is performed preferably by the maintenance person. On the other hand, in the case where the abnormality in wind turbine generator 20 is minor, user A does not need to request the maintenance person who requires a maintenance fee for maintenance. Thus, in the case where the abnormality in wind turbine generator 20 is minor, the maintenance information is transmitted to user terminal 50. User terminal 50 displays the maintenance information to allow the user to recognize the maintenance information.

In the present embodiment, the abnormality not requiring a maintenance person (a minor abnormality) is also referred to as a "first abnormality". Further, the abnormality requiring a maintenance person (a severe abnormality) is also referred to as a "second abnormality".

As described above, based on the wind turbine generator ID, controller 100 can specify the installation position of wind turbine generator 20 indicated by this wind turbine generator ID. Controller 100 transmits the installation position together with the maintenance information to the terminal device as a target for transmission.

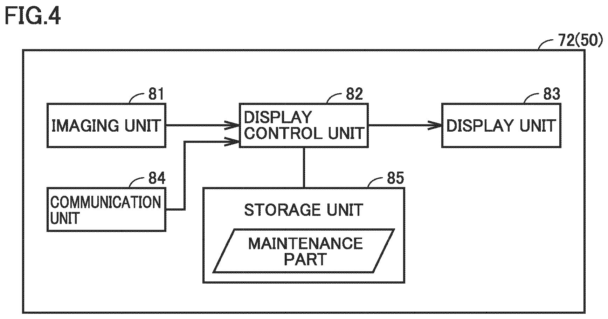

Fig. 4 is a functional block diagram of maintenance terminal 72. Maintenance terminal 72 includes an imaging unit 81, a display control unit 82, a display unit 83, a communication unit 84, and a storage unit 85. Imaging unit 81 corresponds to the "imaging device" of the present disclosure. Communication unit 84 corresponds to the "communication device" of the present disclosure. The display control unit corresponds to the "controller (or control circuitry)" of the present disclosure. Display unit 83 corresponds to the "display device" of the present disclosure.

Imaging unit 81 captures an image of wind turbine generator 20 or the like to generate imaging data. The imaging data is output to display control unit 82. Display control unit 82 causes display unit 83 to show an image based on the imaging data.

Further, communication unit 84 receives information (for example, maintenance information) from another device (for example, controller 100). The maintenance information is output to display control unit 82. Display control unit 82 causes display unit 83 to show an image based on the maintenance information. Note that user terminal 50 may have the functions shown in Fig. 4.

Storage unit 85 stores a maintenance part. The maintenance part is included in the maintenance information acquired by communication unit 84 (see Fig. 3). The role of this maintenance part will be described later.

### [Display Image]

Then, a display image displayed on maintenance terminal 72 or user terminal 50 will be hereinafter described. The following mainly describes a display image on maintenance terminal 72. Upon receipt of the maintenance information, maintenance terminal 72 gives a notification about the maintenance information. **In** this case, "giving a notification" is a process for causing the user to recognize information. Also, "giving a notification" includes a process of displaying the information and a process of outputting sound indicating the information. The present embodiment describes a configuration in which "giving a notification" is a process of displaying the information.

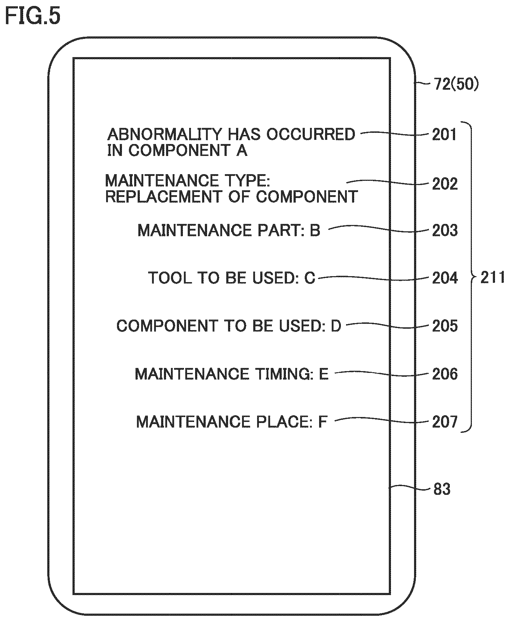

The following describes a display image displayed on display unit 83 of the maintenance terminal. Fig. 5 shows an example of a maintenance image 211 based on the maintenance information. Maintenance image 211 includes images 201 to 207. Fig. 5 shows an example of a display image displayed on display unit 83 of the maintenance terminal that is a portable terminal.

Image 201 shows a component having an abnormality (hereinafter also referred to as an "abnormal component"). The maintenance person visually checks image 201 and thereby can recognize that "an abnormality has occurred in wind turbine generator 20 and an abnormal component". In the example in Fig. 5, image 201 shows that an abnormality occurs in a component A. Note that the example in Fig. 5 shows A to F as images, but these A to F are merely symbols obtained by generalizing the images. Instead of A to F, specific information (names and the like) is actually shown.

Image 202 shows a maintenance type. The maintenance person visually checks image 202 and thereby can recognize the maintenance type. In the example in Fig. 5, image 202 shows replacement of a component (i.e., replacement of component A).

Image 203 shows a maintenance part. The maintenance person visually checks image 203 and thereby can recognize the maintenance part. In the example in Fig. 5, image 203 shows a maintenance part B.

Image 204 shows a tool to be used. The maintenance person visually checks image 204 and thereby can recognize the tool to be used. In the example in Fig. 5, image 204 shows a tool to be used C.

Image 205 shows a component to be used. The maintenance person visually checks image 205 and thereby can recognize a component to be used. The component to be used is, for example, a replacement component for an abnormal component. In the example in Fig. 5, image 205 shows a component to be used D. For example, component to be used D is a component to be used that is shown in image 201.

Image 206 shows a maintenance timing. The maintenance person visually checks image 206 and thereby can recognize the maintenance timing. In the example in Fig. 5, image 206 shows a maintenance timing E.

Image 207 shows a maintenance place. The maintenance person visually checks image 207 and thereby can recognize the maintenance place. In the example in Fig. 5, image 207 shows a maintenance place F. Maintenance place F is an installation position of wind turbine generator 20 as a target to receive maintenance.

The image data of each of images 201 to 206 in maintenance image 211 in Fig. 5 is based on the maintenance information (see Fig. 3) in Fig. 5. The image data of image 207 is based on the wind turbine generator ID.

Fig. 5 shows an example in which controller 100 determines that the abnormality in wind turbine generator 20 is the second abnormality (a severe abnormality) and transmits the maintenance information to maintenance terminal 72 to cause maintenance terminal 72 to display the maintenance information. As described above, in the case where controller 100 determines that the abnormality in wind turbine generator 20 is the first abnormality (a minor abnormality), controller 100 transmits the maintenance information to user terminal 50 and causes user terminal 50 to display the maintenance image.

When the maintenance timing arrives, for example, the maintenance person carrying maintenance terminal 72 that is a portable terminal visits the maintenance site (i.e., the position of wind turbine generator 20 as a target to receive maintenance). Then, the maintenance person captures an image of maintenance terminal 72 and also captures an image of the vicinity of an abnormal part in wind turbine generator 20. The captured image may be a still image or a moving image.

As described with reference to Fig. 4, storage unit 85 of maintenance terminal 72 stores a maintenance part included in the maintenance information. Display control unit 82 analyzes the imaging data from imaging unit 81 to specify a part corresponding to the maintenance part in the imaging data. The specifying method may, for example, be a method using AI or other methods (for example, a matching process).

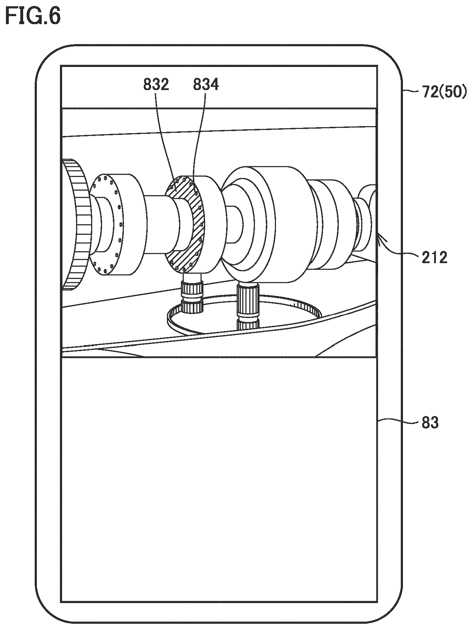

Then, display control unit 82 displays the captured image of the maintenance part in wind turbine generator 20 in a manner different from that of display of the captured images of other parts in wind turbine generator 20. Fig. 6 is a diagram showing an example of a captured image 212. In the example in Fig. 6, the maintenance person captures an image of the bearing of wind turbine generator 20. Further, the following describes an example of an abnormality, for example, that a bolt of a flat plate portion of the bearing is loose. In the example in Fig. 6, display control unit 82 displays a flat plate portion 832 (a maintenance part) of the bearing in a different manner from the manner in which other parts are displayed. The "different manner" means, for example, that display control unit 82 displays flat plate portion 832 in a manner in which light blinks on and off. In the example in Fig. 6, flat plate portion 832 is shown by hatch lines. For example, the maintenance person visually checks the flat plate portion of the actual bearing, and thereby can recognize that the abnormal part is the flat plate portion and that the bolt (a bolt 834 in the example in Fig. 6) of the flat plate portion is loose.

### [Flowchart]

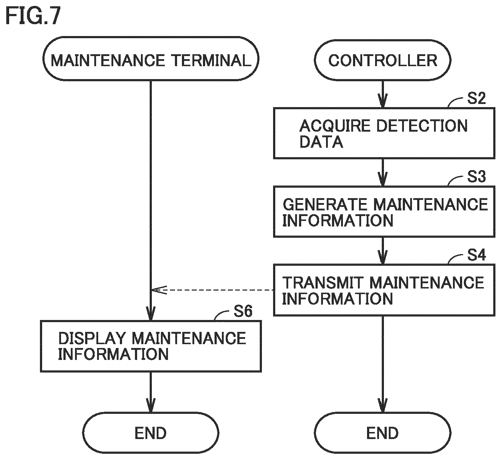

Fig. 7 is an example of a flowchart illustrating a process of maintenance terminal 72 and a process of controller 100. The flowchart in Fig. 7 is started every time the above-mentioned prescribed time period (for example, one hour) elapses.

First, in step S2, controller 100 acquires detection data from detection unit 45. Then, in step S3, controller 100 generates maintenance information based on the detection data. Then, in step S4, controller 100 transmits the maintenance information to maintenance terminal 72. In step S6, maintenance terminal 72 displays the maintenance information (see Figs. 5 and 6).

### [Functions and Effects]

As shown in Fig. 3, based on the detection data, controller 100 generates maintenance information related to maintenance for wind turbine generator 20. Then, controller 100 transmits the maintenance information to maintenance terminal 72 or user terminal 50. Then, maintenance terminal 72 or user terminal 50 gives a notification about the maintenance information. According to such a configuration, management system 10 allows the owner (the maintenance person) of maintenance terminal 72 or the owner (the user) of user terminal 50 to recognize the maintenance information related to the maintenance for wind turbine generator 20.

As shown in Figs. 3 and 5, controller 100 specifies the maintenance type, and the maintenance information includes the maintenance type. According to such a configuration, management system 10 allows the owner (the maintenance person) of maintenance terminal 72 or the owner (the user) of user terminal 50 to recognize the maintenance type of wind turbine generator 20.

Further, as shown in Fig. 5, the maintenance type includes at least one of a repair of a component of wind turbine generator 20, a position adjustment of the component, and an inspection of the component. Such a configuration allows the owner of the first terminal device to recognize that the maintenance type is one of a repair of a component of the wind turbine generator, a position adjustment of the component, and an inspection of the component.

Further, as shown in Figs. 3 and 5, controller 100 specifies a maintenance part of wind turbine generator 20 based on the detection data. The maintenance information includes a maintenance part. According to such a configuration, management system 10 allows the owner (the maintenance person) of maintenance terminal 72 or the owner (the user) of user terminal 50 to recognize the maintenance part of wind turbine generator 20.

Further, as shown in Figs. 3 and 5, based on the detection data, controller 100 specifies tools and components necessary for maintenance for wind turbine generator 20. The maintenance information includes information indicating tools and components. According to such a configuration, management system 10 allows the owner (the maintenance person) of maintenance terminal 72 or the owner (the user) of user terminal 50 to recognize the tools and components necessary for maintenance for wind turbine generator 20.

As shown in Figs. 3 and 5, controller 100 specifies the maintenance timing for wind turbine generator 20 based on the detection data. The maintenance information includes information indicating the maintenance timing. Such a configuration allows the owner (the maintenance person) of maintenance terminal 72 or the owner (the user) of user terminal 50 to recognize the maintenance timing.

Further, as shown in Figs. 3 and 5, controller 100 specifies an abnormal part in the wind turbine generator based on the detection data. The maintenance information includes information indicating the abnormal part. Such a configuration allows the owner (the maintenance person) of maintenance terminal 72 or the owner (the user) of user terminal 50 to recognize the abnormal part in wind turbine generator 20.

As shown in Figs. 3 and 5, controller 100 specifies the degree of abnormality in wind turbine generator 20 based on the detection data, and transmits the maintenance information to maintenance terminal 72 and user terminal 50 according to the degree of abnormality. For example, if the degree of abnormality in wind turbine generator 20 is severe, the maintenance information is transmitted to maintenance terminal 72. This allows the maintenance person to perform maintenance for eliminating the severe abnormality. On the other hand, if the degree of abnormality in wind turbine generator 20 is minor, the maintenance information is transmitted to user terminal 50. Thereby, the user himself/herself can eliminate the minor abnormality without requesting the maintenance person.

As shown in Fig. 5 and the like, maintenance terminal 72 or user terminal 50 is a portable terminal device that can be carried by the maintenance person or the user. Thus, the maintenance person or the user can perform maintenance for wind turbine generator 20 while visually checking the maintenance information at the maintenance site.

Further, as shown in Fig. 6, maintenance terminal 72 or user terminal 50 displays captured image 212 of the maintenance part in wind turbine generator 20 in a manner different from that of display of captured images 212 of other parts in wind turbine generator 20. Therefore, the maintenance person or the user can easily specify the maintenance part.

### [Other Embodiments]

In the configuration described in the above embodiment, controller 100 generates the maintenance information. However, another device may have the function of generating the maintenance information. For example, another device may be maintenance terminal 72. For example, display control unit 82 shown in Fig. 4 has the function of estimation unit 1102 (the function of generating maintenance information). In other words, display control unit 82 generates maintenance information and causes display unit 83 (a display) to show the maintenance information. Further, the hardware configuration of maintenance terminal 72 employing the configuration as described above has a configuration in which display unit 83 (a display) is added to the configuration shown in Fig. 2. According to such a configuration, maintenance terminal 72 itself can generate and display the maintenance information.
(1) In the above description of the example in Fig. 3, the input data includes the maintenance schedule. However, the input data may not include the maintenance schedule. Further, controller 100 may specify the maintenance timing based on other information about the maintenance schedule. The other information includes, for example, a timing when a replacement component for an abnormal component can be delivered and a timing when a carrier can be used. The timing when a replacement component can be delivered is, for example, information transmitted from a terminal of the delivery service provider that delivers the replacement component. Further, in the case where wind turbine generator 20 is installed at a special position, the carrier conveys the maintenance person or the user to this special position. If the special position is on the ocean, the carrier is a ship.
(2) In the configuration described in the above embodiment, controller 100 generates the maintenance information mainly with the use of AI. However, controller 100 may employ another method to generate at least part of the maintenance information. For example, controller 100, a designer or the like may construct a database in which the detection data is associated with the maintenance information, and also, controller 100 may use the database to generate the maintenance information.

It should be understood that the embodiments disclosed herein are illustrative and non-restrictive in every respect. The scope of the present invention is defined by the terms of the claims, rather than the above description of the embodiments, and is intended to include any modifications within the meaning and scope of the claims.

### REFERENCE SIGNS LIST

10 management system, 11 computing device, 12 storage device, 14 communication device, 20 wind turbine generator, 30 collection device, 45 detection unit, 50 user terminal, 72 maintenance terminal, 81 imaging unit, 82 display control unit, 83 display unit, 84 communication unit, 85 storage unit, 100 controller, 121 estimation model, 122 estimation program, 130 removable disk, 201, 202, 203, 204, 205, 206, 207 image, 211 maintenance image, 212 captured image, 832 flat plate portion, 1101 input unit, 1102 estimation unit, 1104 output unit, 1211 neural network.

## Claims

1. A management system (10) comprising:
a detection unit (45) that acquires detection data of a wind turbine generator (20);
a controller (100) that generates maintenance information related to maintenance for the wind turbine generator (20) based on the detection data; and
a first terminal device (72), wherein
the controller (100) is configured to transmit the maintenance information to the first terminal device (72), wherein
the controller (100) is configured to specify a maintenance type of the wind turbine generator (20) based on the detection data, and
the maintenance information includes information indicating the maintenance type, wherein
the detection unit (45) is constituted of
N sensors S and a collection device (30), whereby the collection device (30) collects physical quantities and transmits the same as detection data to controller (100), or
a camera that captures an image as detection data,
**characterized in that**
the controller (100) generates the maintenance information using artificial intelligence (AI) to identify an abnormality or abnormality sign in a bearing as a component of the wind turbine generator (20), wherein
the controller (100) is configured to specify an abnormal bearing in the wind turbine generator (20) based on the detection data, and
the maintenance information includes information indicating the abnormal bearing, wherein
the maintenance type includes at least one of a repair of the bearing of the wind turbine generator (20), a position adjustment of the bearing, and an inspection of the bearing, wherein
the position adjustment of the component includes a position adjustment of a main shaft of the bearing of the wind turbine generator (20).

2. The management system (10) according to claim 1, wherein
the controller (100) is configured to specify a maintenance part of the bearing of the wind turbine generator (20) based on the detection data, and
the maintenance information includes information indicating the maintenance part.

3. The management system (10) according to claim 1, wherein
the controller (100) is configured to specify a tool and a component necessary for maintenance for the wind turbine generator (20) based on the detection data, and
the maintenance information includes information indicating the tool and the component.

4. The management system (10) according to claim 1, wherein
the controller (100) is configured to specify a maintenance timing for the wind turbine generator (20) based on the detection data, and
the maintenance information includes information indicating the maintenance timing.

5. The management system (10) according to claim 1, further comprising a second terminal device (50), wherein
the controller (100) is configured to specify a degree of abnormality in the wind turbine generator (20) based on the detection data, and
the controller (100) is configured to transmit the maintenance information to one of the first terminal device (72) and the second terminal device (50) according to the degree of abnormality.

6. The management system (10) according to claim 1, wherein the first terminal device (72) is a portable terminal device.

7. The management system (10) according to claim 6, wherein
the first terminal device (72) includes
an imaging device that captures an image of the wind turbine generator (20),
a display device that shows a captured image captured by the imaging device, and
a display controller, wherein
the display controller displays the captured image of a maintenance part in the wind turbine generator (20) in a manner different from a manner of display of the captured image of each of other parts in the wind turbine generator (20).

8. The management system according to claim 1, wherein the controller (100) comprises:
an input interface that receives an input of detection data of the wind turbine generator (20) from the detection unit (45) that acquires the detection data;
a processor that generates maintenance information related to maintenance for the wind turbine generator (20) based on the detection data; and
an output interface that transmits the maintenance information to a first terminal device (72).

9. The management system according to claim 1, wherein the terminal device comprises:
an input interface that receives an input of detection data of the wind turbine generator (20) from the detection unit (45) that acquires the detection data;
a processor that generates maintenance information related to maintenance for the wind turbine generator (20) based on the detection data; and
a display that shows an image based on the maintenance information.

10. A management method comprising:
receiving an input of detection data of a wind turbine generator (20) from a detection unit (45) that acquires the detection data;
generating maintenance information related to maintenance for the wind turbine generator (20) based on the detection data; and
transmitting the maintenance information to a first terminal device (72), wherein
the maintenance information includes information indicating the maintenance type,
the method further comprises:
detecting physical quantities by N sensors,
collecting the physical quantities with a collection device (30), wherein the N sensors and collection device (30) form part of the detection unit (45), and
transmitting the physical quantities as detection data to controller (100) or
capturing an image as detection data with a camera,
generating the maintenance information using artificial intelligence to identify an abnormality or abnormality sign in a bearing as a component of the wind turbine generator (20),
specifying an abnormal bearing based on the detection data with the controller (100) configured for specifying, wherein
the maintenance information includes information indicating the abnormal bearing, and
the maintenance type includes at least one of a repair of the bearing, a position adjustment of the bearing, and an inspection of the bearing.

## Patentansprüche

1. Verwaltungssystem (10), umfassend:
eine Erfassungseinheit (45), die Erfassungsdaten eines Windturbinengenerators (20) erfasst;
eine Steuerung (100), die Wartungsinformationen in Bezug auf die Wartung für den Windturbinengenerator (20) basierend auf den Erfassungsdaten erzeugt; und
ein erstes Endgerät (72), wobei
die Steuerung (100) konfiguriert ist, um die Wartungsinformationen an das erste Endgerät (72) zu übertragen, wobei
die Steuerung (100) konfiguriert ist, um einen Wartungstyp des Windturbinengenerators (20) basierend auf den Erfassungsdaten zu spezifizieren, und
die Wartungsinformationen Informationen beinhalten, die den Wartungstyp angeben, wobei
die Erfassungseinheit (45) gebildet ist aus
N Sensoren S und einer Sammelvorrichtung (30), wobei die Sammelvorrichtung (30) physikalische Größen sammelt und diese als Erfassungsdaten an die Steuerung (100) überträgt, oder
einer Kamera, die ein Bild als Erfassungsdaten aufnimmt,
**dadurch gekennzeichnet, dass**
die Steuerung (100) die Wartungsinformationen unter Verwendung künstlicher Intelligenz (AI) erzeugt, um eine Anomalie oder ein Anomaliezeichen in einem Lager als eine Komponente des Windturbinengenerators (20) zu identifizieren, wobei
die Steuerung (100) konfiguriert ist, um ein anormales Lager in dem Windturbinengenerator (20) basierend auf den Erfassungsdaten zu spezifizieren, und
die Wartungsinformationen Informationen beinhalten, die das anormale Lager angeben, wobei
der Wartungstyp mindestens eines von einer Reparatur des Lagers des Windturbinengenerators (20), einer Positionsanpassung des Lagers und einer Inspektion des Lagers beinhaltet, wobei
die Positionsanpassung der Komponente eine Positionsanpassung einer Hauptwelle des Lagers des Windturbinengenerators (20) beinhaltet.

2. Verwaltungssystem (10) nach Anspruch 1, wobei
die Steuerung (100) konfiguriert ist, um einen Wartungsteil des Lagers des Windturbinengenerators (20) basierend auf den Erfassungsdaten zu spezifizieren, und
die Wartungsinformationen Informationen beinhalten, die das Wartungsteil angeben.

3. Verwaltungssystem (10) nach Anspruch 1, wobei
die Steuerung (100) konfiguriert ist, um ein Werkzeug und eine Komponente, die für die Wartung für den Windturbinengenerator (20) notwendig sind, basierend auf den Erfassungsdaten zu spezifizieren, und
die Wartungsinformationen Informationen beinhalten, die das Werkzeug und die Komponente angeben.

4. Verwaltungssystem (10) nach Anspruch 1, wobei
die Steuerung (100) konfiguriert ist, um einen Wartungszeitpunkt für den Windturbinengenerator (20) basierend auf den Erfassungsdaten zu spezifizieren, und
die Wartungsinformationen Informationen beinhalten, die den Wartungszeitpunkt angeben.

5. Verwaltungssystem (10) nach Anspruch 1, ferner umfassend ein zweites Endgerät (50), wobei
die Steuerung (100) konfiguriert ist, um einen Grad der Anomalie in dem Windturbinengenerator (20) basierend auf den Erfassungsdaten zu spezifizieren, und
die Steuerung (100) konfiguriert ist, um die Wartungsinformationen an eines von dem ersten Endgerät (72) und dem zweiten Endgerät (50) gemäß dem Grad der Anomalie zu übertragen.

6. Verwaltungssystem (10) nach Anspruch 1, wobei das erste Endgerät (72) ein tragbares Endgerät ist.

7. Verwaltungssystem (10) nach Anspruch 6, wobei
das erste Endgerät (72) umfasst
eine Bildgebungsvorrichtung, die ein Bild des Windturbinengenerators (20) aufnimmt,
eine Anzeigevorrichtung, die ein aufgenommenes Bild zeigt, das von der Bildgebungsvorrichtung aufgenommen wurde, und
eine Anzeigesteuerung, wobei
die Anzeigesteuerung das aufgenommene Bild eines Wartungsteils in dem Windturbinengenerator (20) auf eine Weise anzeigt, die sich von einer Anzeigeweise des aufgenommenen Bildes jedes der anderen Teile in dem Windturbinengenerator (20) unterscheidet.

8. Verwaltungssystem nach Anspruch 1, wobei die Steuerung (100) umfasst:
eine Eingabeschnittstelle, die eine Eingabe von Erfassungsdaten des Windturbinengenerators (20) von der Erfassungseinheit (45) empfängt, die die Erfassungsdaten erfasst;
einen Prozessor, der Wartungsinformationen in Bezug auf die Wartung für den Windturbinengenerator (20) basierend auf den Erfassungsdaten erzeugt; und
eine Ausgabeschnittstelle, die die Wartungsinformationen an ein erstes Endgerät (72) überträgt.

9. Verwaltungssystem nach Anspruch 1, wobei das Endgerät umfasst:
eine Eingabeschnittstelle, die eine Eingabe von Erfassungsdaten des Windturbinengenerators (20) von der Erfassungseinheit (45) empfängt, die die Erfassungsdaten erfasst;
einen Prozessor, der Wartungsinformationen in Bezug auf die Wartung für den Windturbinengenerator (20) basierend auf den Erfassungsdaten erzeugt; und
eine Anzeige, die ein Bild basierend auf den Wartungsinformationen zeigt.

10. Verwaltungsverfahren, umfassend:
Empfangen einer Eingabe von Erfassungsdaten eines Windturbinengenerators (20) von einer Erfassungseinheit (45), die die Erfassungsdaten erfasst;
Erzeugen von Wartungsinformationen in Bezug auf die Wartung für den Windturbinengenerator (20) basierend auf den Erfassungsdaten; und
Übertragen der Wartungsinformationen an ein erstes Endgerät (72), wobei
die Wartungsinformationen Informationen beinhalten, die den Wartungstyp angeben,
das Verfahren ferner umfasst:
Erfassen von physikalischen Größen durch N Sensoren,
Sammeln der physikalischen Größen mit einer Sammelvorrichtung (30), wobei die N Sensoren und die Sammelvorrichtung (30) einen Teil der Erfassungseinheit (45) bilden, und
Übertragen der physikalischen Größen als Erfassungsdaten an die Steuerung (100) oder
Aufnehmen eines Bildes als Erfassungsdaten mit einer Kamera,
Erzeugen der Wartungsinformationen unter Verwendung künstlicher Intelligenz, um eine Anomalie oder ein Anomaliezeichen in einem Lager als eine Komponente des Windturbinengenerators (20) zu identifizieren,
Spezifizieren eines anormalen Lagers basierend auf den Erfassungsdaten mit der Steuerung (100), die zum Spezifizieren konfiguriert ist, wobei
die Wartungsinformationen Informationen beinhalten, die das anormale Lager angeben, und
der Wartungstyp mindestens eines von einer Reparatur des Lagers, einer Positionsanpassung des Lagers und einer Inspektion des Lagers beinhaltet.

## Revendications

1. Système de gestion (10) comprenant :
une unité de détection (45) qui acquiert des données de détection d'une génératrice d'éolienne (20) ;
un contrôleur (100) qui génère des informations de maintenance en lien avec une maintenance pour la génératrice d'éolienne (20) sur la base des données de détection ; et
un premier dispositif terminal (72), dans lequel
le contrôleur (100) est configuré pour transmettre les informations de maintenance au premier dispositif terminal (72), dans lequel
le contrôleur (100) est configuré pour spécifier un type de maintenance de la génératrice d'éolienne (20) sur la base des données de détection, et
les informations de maintenance incluent des informations indiquant le type de maintenance, dans lequel
l'unité de détection (45) est constituée de
N capteurs S et un dispositif de collecte (30), le dispositif de collecte (30) collectant des quantités physiques et transmettant celles-ci à titre de données de détection au contrôleur (100), ou
une caméra qui capture une image à titre de données de détection,
**caractérisé en ce que**
le contrôleur (100) génère les informations de maintenance à l'aide d'une intelligence artificielle (AI) pour identifier une anomalie ou un signe d'anomalie dans un palier à titre de composant de la génératrice d'éolienne (20), dans lequel le contrôleur (100) est configuré pour spécifier un palier anormal dans la génératrice d'éolienne (20) sur la base des données de détection, et
les informations de maintenance incluent des informations indiquant le palier anormal, dans lequel
le type de maintenance inclut au moins un élément parmi une réparation du palier de la génératrice d'éolienne (20), un ajustement de position du palier, et une inspection du palier, dans lequel
l'ajustement de position du composant inclut un ajustement de position d'un arbre principal du palier de la génératrice d'éolienne (20).

2. Système de gestion (10) selon la revendication 1, dans lequel
le contrôleur (100) est configuré pour spécifier une pièce de maintenance du palier de la génératrice d'éolienne (20) sur la base de données de détection, et
les informations de maintenance incluent les informations indiquant la pièce de maintenance.

3. Système de gestion (10) selon la revendication 1, dans lequel
le contrôleur (100) est configuré pour spécifier un outil et un composant nécessaires pour une maintenance de la génératrice d'éolienne (20) sur la base des données de détection, et
des informations de maintenance incluent les informations indiquant l'outil et le composant.

4. Système de gestion (10) selon la revendication 1, dans lequel
le contrôleur (100) est configuré pour spécifier une temporisation de maintenance pour la génératrice d'éolienne (20) sur la base des données de détection, et
les informations de maintenance incluent des informations indiquant la temporisation de maintenance.

5. Système de gestion (10) selon la revendication 1, comprenant en outre un deuxième dispositif terminal (50), dans lequel
le contrôleur (100) est configuré pour spécifier un degré d'anomalie dans la génératrice d'éolienne (20) sur la base de données de détection, et
le contrôleur (100) est configuré pour transmettre les informations de maintenance à l'un du premier dispositif terminal (72) et du deuxième dispositif terminal (50) en fonction du degré d'anomalie.

6. Système de gestion (10) selon la revendication 1, dans lequel le premier dispositif terminal (72) est un dispositif terminal portable.

7. Système de gestion (10) selon la revendication 6, dans lequel le premier dispositif terminal (72) inclut
un dispositif d'imagerie qui capture une image de la génératrice d'éolienne (20), un dispositif d'affichage qui montre une image capturée, capturée par le dispositif d'imagerie, et
un contrôleur d'affichage, dans lequel
le contrôleur d'affichage affiche l'image capturée d'une pièce de maintenance dans la génératrice d'éolienne (20) d'une manière différente d'une manière d'affichage de l'image capturée de chacune d'autres parties dans la génératrice d'éolienne (20).

8. Système de gestion selon la revendication 1, dans lequel le contrôleur (100) comprend :
une interface d'entrée qui reçoit une entrée de données de détection de la génératrice d'éolienne (20) depuis l'unité de détection (45) qui acquiert les données de détection ;
un processeur qui génère des informations de maintenance en lien avec une maintenance pour la génératrice d'éolienne (20) sur la base de données de détection ; et
une interface de sortie qui transmet les informations de maintenance à un premier dispositif terminal (72).

9. Système de gestion selon la revendication 1, dans lequel le dispositif terminal comprend :
une interface d'entrée qui reçoit une entrée de données de détection de la génératrice d'éolienne (20) depuis l'unité de détection (45) qui acquiert les données de détection ;
un processeur qui génère des informations de maintenance en lien avec une maintenance pour la génératrice d'éolienne (20) sur la base des données de détection ; et
un affichage qui montre une image sur la base des informations de maintenance.

10. Procédé de gestion comprenant les étapes consistant à :
recevoir une entrée de données de détection d'une génératrice d'éolienne (20) depuis l'unité de détection (45) qui acquiert les données de détection ;
générer des informations de maintenance en lien avec une maintenance pour la génératrice d'éolienne (20) sur la base de données de détection ; et
transmettre les informations de maintenance à un premier dispositif terminal (72), dans lequel
les informations de maintenance incluent des informations indiquant le type de maintenance,
le procédé comprenant en outre les étapes consistant à :
détecter des quantités physiques via N capteurs,
collecter les quantités physiques avec un dispositif de collecte (30), les N capteurs et le dispositif de collecte (30) formant partie de l'unité de détection (45), et
transmettre les quantités physiques à titre de données de détection au contrôleur (100) ou
capturer une image à titre de données de détection avec une caméra,
générer les informations de maintenance à l'aide d'une intelligence artificielle pour identifier une anomalie ou un signe d'anomalie dans un palier à titre de composant de la génératrice d'éolienne (20),
spécifier un palier anormal sur la base des données de détection avec le contrôleur (100) configuré pour une spécification, dans lequel
les informations de maintenance incluent des informations indiquant le palier anormal, et
le type de maintenance inclut au moins un élément parmi une réparation du palier, un ajustement de position du palier, et une inspection du palier.
